(19)

Europäisches
Patentamt
European
Patent Office
Office européen
des brevets

(11) **EP 3 279 426 A1**

(12) **EUROPEAN PATENT APPLICATION**

(43) Date of publication:
07.02.2018 Bulletin 2018/06

(51) Int Cl.:
*E21B 17/07* (2006.01)          *E21B 17/10* (2006.01)
*F16D 33/00* (2006.01)

(21) Application number: 16182971.8

(22) Date of filing: 05.08.2016

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Shell Internationale Research
Maatschappij B.V.
2596 HR  Den Haag (NL)**

(72) Inventors:
• **The inventor has waived his right to be thus
mentioned.**

(74) Representative: **Matthezing, Robert Maarten
Shell International B.V.
Intellectual Property Services
P.O. Box 384
2501 CJ The Hague (NL)**

(54) **METHOD AND SYSTEM FOR INHIBITING TORSIONAL OSCILLATIONS IN A DRILLING
ASSEMBLY**

(57)     Torsional oscillations in a drilling assembly are inhibited by arranging at least one stabilizer assembly(3) around a downhole drill string section(1) by means of a friction coupling assembly(6) that generates an increased torque in response to an increase of rotary speed of the downhole drill string section(1) in a similar manner as a fluid coupling in automotive automatic gearboxes.

Fig.3B Longitudinal section of DSM Tool

**Description**

BACKGROUND OF THE INVENTION

The invention relates to a method and system for inhibiting torsional oscillations in a drilling assembly.

It is known that cyclically varying interaction between a rotary drilling assembly and the wall and bottom of the borehole being drilled may trigger torsional oscillations in the drill string that may lead to a cyclic winding up and down of the up to kilometers long drill string resulting in a cyclic stick-slip motion pattern of the Bottom Hole Assembly(BHA) at the bottom of the drill string.

In particular in deep deviated boreholes the drill string and BHA may be pushed by the elevated mud pressure into the sticky mud cake layer covering the borehole wall, which may generate significant static friction and often a reduced friction once the drill string and BHA are rotating within the mudcake layer, thereby generating or enhancing an oscillating stick-slip motion pattern.

Oscillating torsional vibration is a key example of a drill string dysfunction, which is particularly detrimental to the drilling performance and the integrity of the drilling assembly.

This oscillating vibration mode may be triggered or further enhanced by a rotary speed dependent torque of the Bottom Hole Assembly (BHA) at the bottom of the drill string. In case the relation between torque and rotary speed comprises a rotation per minute (rpm) range where the torque decreases with rotary speed i.e a negative gradient, this may trigger a self-exciting torsional resonance mode with continuously increasing amplitude. The first torsional resonance frequency is governed by the torsional stiffness of the drill string and the polar mass moment of inertia of the BHA.

Once the amplitude of this torsional resonance mode exceeds the nominal rotary speed of the drilling assembly, a stick-slip mode will develop which implies that the BHA including the bit will come to a stand-still while the drill string is being torqued-up by the rotary drive of the rig. Once the static rotary torque of the BHA is overcome the BHA accelerates, reaches its maximum rpm, decelerates and repeats the cycle again.

In this mode the rotary speed of the BHA may range from 0 to up to 5 times the nominal rpm of the drilling assembly with a period of up to 10 seconds assuming a drill string of some 5000 m length drilling a borehole with a diameter of about 30 cm. Once the stick-slip mode has developed, the lateral resonance modes of the BHA in this rpm range are triggered twice during each stick-slip cycle, which results in overloading and ultimately premature failure of the drilling assembly.

US patent 6,166,654 discloses a drill string oscillation inhibition technology invented by Leon van den Steen et al known as "Soft Torque" Technology ("Soft Torque" is a Shell trademark) to mitigate the tendency of a drilling assembly to enter into this stick-slip resonance mode. The technology makes use of an electronic control system for the rotary drive motor on the rig, which is tuned to the first torsional resonance mode of a specific drill string/BHA mass spring system, such that the rig drive absorbs the potential energy stored in the drill string optimally.

UK patent GB2525828 discloses a further optimized Soft Torque technology invented by Sicco Dwars et al known as Z-torque technology comprising an adaptive electronic control system for the rotary drive on the rig. This system characterizes the dynamic behavior of the drilling assembly at regular times and this way optimizes the absorption of the energy stored in the drilling assembly during a torsional vibration cycle based on the actual torsional characteristics of the drilling assembly determined by the control system. This enables the Z-torque technology not only to inhibit the first torsional resonance mode of the drilling assembly but also to inhibit higher order resonances.

However the performance of the system depends on the characterization, which is calculated from the response of the drill string to a calibration signal sent from the surface.

The above implies that the drill string response may be affected by the torsional friction experienced by the drill string in e.g. a kick-off section of the well. High friction may affect the response to the calibration signals sent by the control system into the drill string. Consequently torsional vibrations triggered by e.g. the BHA or the drill bit may develop in local self-exciting detrimental torsional resonances, which are not detected by the Z-torque technology and can thus not be suppressed by it. This is likely to happen in deep deviated wells while drilling small borehole sizes.

It is observed that it is known from US patent 4,083,612 to arrange a non-rotating stabilizer around a rotating drill string by a bearing assembly that does not dampen torsional drill string vibrations.

There is a need for a down-hole tool concept that enables effective damping of local self-exciting torsional drill string resonances.

Furthermore is a need for an improved drill string oscillation inhibition method and system that meet these objectives and overcomes drawbacks of known systems.

SUMMARY OF THE INVENTION

In accordance with the invention there is provided a method for inhibiting torsional oscillations in a drilling assembly, the method comprising arranging at least one stabilizer around a downhole drill string section by means of a friction coupling that generates an increased torque in response to an increase of rotary speed of the downhole drill string section.

The friction coupling may generate an increased torque throughout at least a minor, substantial or major part of a rotary speed range between 0 and 200 rotations per minute (rpm) of the downhole drill string section and comprise a fluid coupling with a fluid filled chamber comprising a first turbine blade assembly connected to the drill string section and a second turbine assembly connected to the stabilizer, which turbine blade assemblies circulate a fluid flux through the chamber which increases in response to an increased difference of the rotary speed of the drill string section relative to the stabilizer.

The fluid coupling may comprise a hydraulic coupling as used in automatic automotive gearboxes comprising a doughnut-shaped sealed chamber filled with hydraulic fluid through which a pair of semi-toroidally shaped turbine assemblies circulate a toroidal fluid flux of which the velocity is proportional to a difference of the rotary speed of the drill string section relative to the stabilizer.

In accordance with the invention there is further provided a system for inhibiting torsional oscillations in a drilling assembly, the system comprising at least one stabilizer configured to be arranged around a downhole drill string section by means of a friction coupling that generates an increased torque in response to an increase of rotary speed of the downhole drill string section.

These and other features, embodiments and advantages of the method and system according to the invention are described in the accompanying claims, abstract and the following detailed description of nonlimiting embodiments depicted in the accompanying drawings, in which description reference numerals are used which refer to corresponding reference numerals that are depicted in the drawings.

Similar reference numerals in different figures denote the same or similar objects. Objects and other features depicted in the figures and/or described in this specification, abstract and/or claims may be combined in different ways by a person skilled in the art.

BRIEF DESCRIPTION OF THE DRAWINGS

Figure 1 is a graph illustrating a typical BHA rotary torque-rotations per minute(rpm) characteristic;
Figure 2 is a graph illustrating a stick-slip rotary speed mode of a BHA;
Figures 3A and 3B show schematic cross-sectional and longitudinal sectional views of the downhole torsional vibration inhibiting tool according to the present invention; and
Figure 4 is a graph illustrating the effect of the downhole torsional vibration inhibiting tool according to the invention on the BHA rotary torque-rpm characteristic.

DETAILED DESCRIPTION OF THE DEPICTED EMBODIMENTS

Drill bits used for oil and gas well drilling are generally driven by a rotary table or swivel at the drilling rig via an elongate drill string that may be up to several kilometers long.

The lower section of the drill string is known as the Bottom Hole Assembly (BHA) and comprises heavyWeight Drill Collars abbreviated as DCs and HeavyWeight Drill Pipes abbreviated as HWDPs. These BHA tubulars a high weight per meter in order to apply a desired Weight On Bit (WOB) in order to optimize the drilling performance of the rotary drill bit at the bottom of the BHA. This enables use of a relatively slender string of drill pipes above the BHA that is generally operated in tension during drilling. The DC-section is typically provided with a series of bladed stabilizers that slide along the borehole wall to prevent buckling of the BHA that is generally operated in compression. In addition, the stabilizers are positioned such that a specific string rotary speed range is created, which does not trigger lateral resonance frequencies of the DC-sections between the stabilizers.

In this way a stable operating window in terms of WOB and drill string rpm can be designed for optimum drill bit performance.

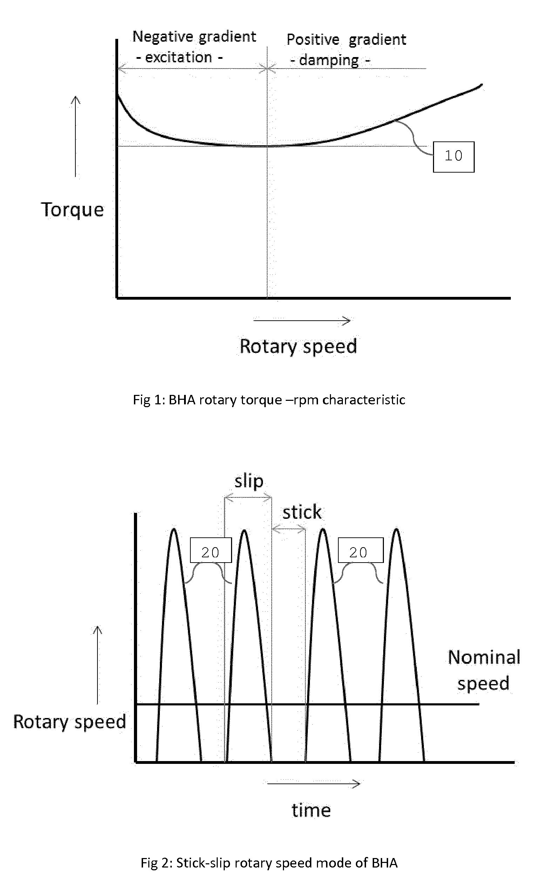

Figures 1 and 2 illustrate that nevertheless an oscillating vibration mode may be triggered by e.g. a rotary speed dependent torque of the Bottom Hole Assembly (BHA) at the bottom of the drill string.

Figure 1 illustrates that the relation between torque and rotary speed may comprise a rotation per minute (rpm) range where the torque decreases with rotary speed thereby generating a negative gradient in the torque-rpm curve 10.

Figure 2 illustrates that the curve 10 illustrated in Figure 1 may trigger a self-exciting torsional resonance mode with continuously increasing amplitude illustrated by curves 20. The torsional resonance frequency may be governed by the torsional stiffness of the drill string and the polar mass moment of inertia of the BHA.

Once the amplitude of this torsional resonance mode exceeds the nominal rotary speed of the drilling assembly, a stick-slip mode illustrated by curves 20 in Figure 2 will develop which implies that the BHA including the bit will come to a stand-still while the drill string is being torqued-up by the rotary drive of the rig. Once the static rotary torque of the BHA is overcome the BHA accelerates, reaches its maximum rpm, decelerates and repeats the cycle again as illustrated by curves 20.

In the stick slip mode illustrated in Figure 2 the rotary speed of the BHA may range from 0 to up to 5 times the nominal rpm of the drilling assembly with a period of up to 10 seconds assuming a drill string of some 5000 m length drilling a borehole with a diameter of about 30 cm. Once the stick-slip mode has developed, the lateral resonance modes of the BHA in this rpm range are triggered twice during each stick-slip cycle, which results in overloading.

The method and system according to the invention are based on the insight that self-exciting torsional resonances of the drilling assembly will not develop into a stick-slip type motion when the rotary torque vs rotary speed curve of the assembly has a positive gradient over the rpm range of interest e.g. from some 10 - 180 rpm. This way there is always a positive damping in the torsional vibration system.

The method and system according to the invention are furthermore based on the insight that this positive gradient can be accomplished by inclusion of fluid couplings (used in e.g. the automotive industry) between the rotating string and the wall of the hole.

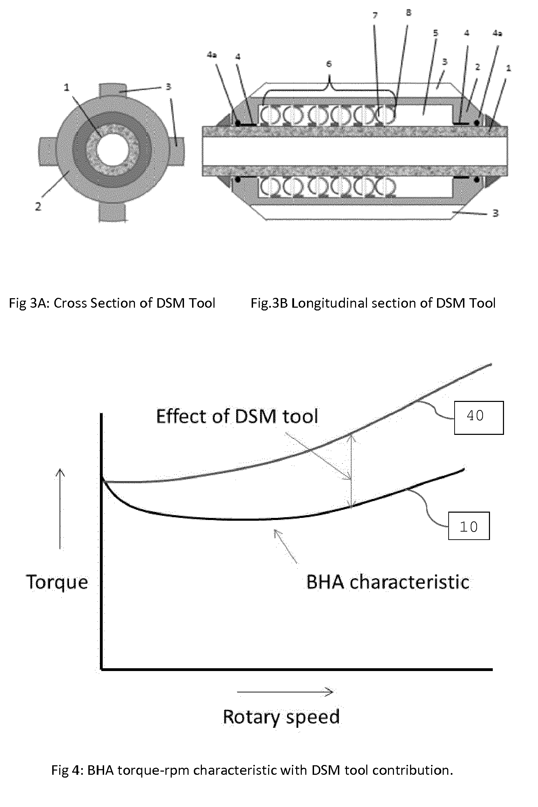

Such a downhole stick-slip mitigation tool integrated in a stabilizer is schematically shown in Figure 3.

The tool is run as a stabilizer in a BHA or other drill string section and has a progressive rotary torque-rpm characteristic 40 illustrated in Figure 4, which is designed such that the total rotary torque for the Bottom Hole Assembly(BHA) is characterized by a positive torque gradient with rotary speed over the full rotary speed range of interest to eliminate the risk of self-exciting torsional resonances in the drill string that may lead to stick-slip. The tool may complement the capability of the known "Soft Torque" ("Soft Torque" is a Shell trademark) and Z-torque torsional vibration inhibiting technologies.

Figure 3 shows that the tool comprises a mandrel (1) provided with connections for mounting the tool in the BHA (not shown in the schematic).

The mandrel (1) is surrounded by a rotatable sleeve (2). The sleeve Outer Diameter (OD) is provided with a number of helically shaped stabilizer blades (3). The helical shape provides support against the hole wall over 360 degrees. The mandrel is supported by bearings (4). Seals (4a) adjacent to the bearings provide a closed annular chamber (5) between the mandrel OD and the sleeve Inner Diameter (ID). This chamber accommodates a series of fluid couplings (6). The impeller (7) of each fluid coupling (6) is connected to the mandrel and the runner or turbine wheel (8) is connected to the sleeve (2). The chamber (5) is filled with a hydraulic fluid in which the fluid couplings (6) operate.

When rotating the mandrel (1) and assuming that the stabilizer blades (3) only slide in along hole direction or rotate at much lower speed than the mandrel (1), the fluid couplings (6) will generate a torque that resists rotation of the mandrel (1). In case the sleeve does not rotate this is the stall torque of the fluid couplings (6).

This torque generated by the fluid couplings (6) can be approximated by the following expression:

$$T = N * K * \rho * \omega^2 \qquad\qquad \text{(Equation I)}$$

with:

N: number of fluid couplings

K: constant governed by dimensional fluid coupling parameters

ρ: density of fluid in coupling

ω: differential rotary speed between mandrel and the stabilizer sleeve.

Superimposing this torque on the rotary torque for the BHA provides the total torque required to rotate the BHA as illustrated by the progressive rotary torque-rpm characteristic curve 40 in Figure 4.

Using equation I the set of fluid couplings can be designed such that over an rpm range of interest the rotary torque versus rpm curve 40 shows a positive gradient and thus provides a positive damping for the torsional vibration system such that self-exciting torsional resonances are suppressed.

Further design parameters available to achieve the desired BHA rotary torque characteristic curve 40 are:

- Number of fluid couplings in the stabilizer
- Density of the fluid in the chamber
- Number of stabilizers in the BHA

# EP 3 279 426 A1

Therefore, the method, system and/or any products according to present invention are well adapted to attain the ends and advantages mentioned as well as those that are inherent therein.

The particular embodiments disclosed above are illustrative only, as the present invention may be modified, combined and/or practiced in different but equivalent manners apparent to those skilled in the art having the benefit of the teachings herein.

Furthermore, no limitations are intended to the details of construction or design herein shown, other than as described in the claims below.

It is therefore evident that the particular illustrative embodiments disclosed above may be altered, combined and/or modified and all such variations are considered within the scope of the present invention as defined in the accompanying claims.

While any methods, systems and/or products embodying the invention are described in terms of "comprising," "containing," or "including" various described features and/or steps, they can also "consist essentially of" or "consist of" the various described features and steps.

All numbers and ranges disclosed above may vary by some amount. Whenever a numerical range with a lower limit and an upper limit is disclosed, any number and any included range falling within the range is specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values.

Also, the terms in the claims have their plain, ordinary meaning unless otherwise explicitly and clearly defined by the patentee.

Moreover, the indefinite articles "a" or "an", as used in the claims, are defined herein to mean one or more than one of the element that it introduces.

If there is any conflict in the usages of a word or term in this specification and one or more patent or other documents that may be cited herein by reference, the definitions that are consistent with this specification should be adopted.

## Claims

1.   A method for inhibiting torsional oscillations in a drilling assembly, the method comprising arranging at least one stabilizer around a downhole drill string section by means of a friction coupling that generates an increased torque in response to an increase of rotary speed of the downhole drill string section.

2.   The method of claim 1, wherein the friction coupling generates an increased torque throughout at least part of a rotary speed range between 0 and 200 rotations per minute (rpm) of the downhole drill string section.

3.   The method of claim 1, wherein the friction coupling comprises a fluid coupling with a fluid filled chamber comprising a first turbine blade assembly connected to the drill string section and a second turbine assembly connected to the stabilizer, which turbine blade assemblies circulate a fluid flux through the chamber which increases in response to an increased difference of the rotary speed of the drill string section relative to the stabilizer.

4.   The method of claim 3, wherein the fluid coupling comprises a hydraulic coupling as used in automatic automotive gearboxes comprising a doughnut-shaped sealed chamber filled with hydraulic fluid through which a pair of semi-toroidally shaped turbine assemblies circulate a toroidal fluid flux of which the velocity is proportional to a difference of the rotary speed of the drill string section relative to the stabilizer.

5.   A system for inhibiting torsional oscillations in a drilling assembly, the system comprising at least one stabilizer configure to be arranged around a downhole drill string section by means of a friction coupling that generates an increased torque in response to an increase of rotary speed of the downhole drill string section.

6.   The system of claim 5, wherein the friction coupling is configured to generate an increased torque throughout at least a substantial part of a rotary speed range between 0 and 200 rotations per minute (rpm) of the downhole drill string section.

7.   The system of claim 5, wherein the friction coupling comprises a fluid coupling with a fluid filled chamber comprising a first turbine blade assembly connected to the drill string section and a second turbine assembly connected to the stabilizer, which turbine blade assemblies circulate a fluid flux through the chamber which increases in response to an increased difference of the rotary speed of the drill string section relative to the stabilizer.

8. The system of claim 7, wherein the fluid coupling comprises a hydraulic coupling as used in automatic automotive gearboxes comprising a doughnut-shaped sealed chamber filled with hydraulic fluid through which a pair of semi-toroidally shaped turbine assemblies circulate a toroidal fluid flux of which the velocity is proportional to a difference of the rotary speed of the drill string section relative to the stabilizer.

Fig 1: BHA rotary torque –rpm characteristic

Fig 2: Stick-slip rotary speed mode of BHA

Fig 3A: Cross Section of DSM Tool    Fig.3B Longitudinal section of DSM Tool

Fig 4: BHA torque-rpm characteristic with DSM tool contribution.

# EP 3 279 426 A1

**EUROPEAN SEARCH REPORT**

Application Number

EP 16 18 2971

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/228028 A1 (TURNER WILLIAM EVANS [US] ET AL) 13 September 2012 (2012-09-13) | 1-3,5-7 | INV. E21B17/07 E21B17/10 F16D33/00 |
| A | * paragraphs [0007], [0033], [0046] - [0051]; figures 1, 4, 5 * | 4,8 | |
| | ----- | | |
| X | US 2013/313022 A1 (KIRKHOPE KENNEDY J [CA] ET AL) 28 November 2013 (2013-11-28) * paragraphs [0009], [0039], [0042] - [0045]; figures 1, 7 * | 1,2,5,6 | |
| | ----- | | |
| X | US 4 989 679 A (AMAUDRIC DU CHAFFAUT BENOIT [FR]) 5 February 1991 (1991-02-05) * column 2, line 26 - line 43 * * column 3, line 42 - column 4, line 41; figures 2, 4-6 * | 1,2,5,6 | |
| | ----- | | |
| | | | **TECHNICAL FIELDS SEARCHED (IPC)** E21B F16D |

The present search report has been drawn up for all claims

| Place of search | Date of completion of the search | Examiner |
|---|---|---|
| The Hague | 18 January 2017 | Jucker, Chava |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 18 2971

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2017

| Patent document cited in search report | Publication date | Patent family member(s) | Publication date |
|---|---|---|---|
| US 2012228028 A1 | 13-09-2012 | CA 2829318 A1<br>CN 103502560 A<br>GB 2503374 A<br>US 2012228028 A1<br>WO 2012161816 A1 | 29-11-2012<br>08-01-2014<br>25-12-2013<br>13-09-2012<br>29-11-2012 |
| US 2013313022 A1 | 28-11-2013 | NONE | |
| US 4989679 A | 05-02-1991 | DE 3869373 D1<br>EP 0323772 A1<br>FR 2625253 A1<br>NO 885690 A<br>US 4989679 A | 23-04-1992<br>12-07-1989<br>30-06-1989<br>26-06-1989<br>05-02-1991 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6166654 A, Leon van den Steen
- GB 2525828 A, Sicco Dwars
- US 4083612 A